# EUROPEAN PATENT SPECIFICATION

(11) **EP 2 546 526 B1**
(45) Date of publication and mention of the grant of the patent: **17.08.2016**
(21) Application number: 11174012.2
(22) Date of filing: 14.07.2011
(51) Int. Cl.: F04D 29/16, A47L 5/14

(54) **An impeller arrangement**
Antriebsanordnung
Agencement de turbine

(43) Date of publication of application: 16.01.2013
(73) Proprietor: Black & Decker Inc., Newark, Delaware 19711 (US)
(72) Inventor: Armstrong, Jonathan, Crook, Durham DL15 0SX (GB); Hill, Steven, Wotton-under-Edge, Gloucestershire GL12 7DF (GB)
(74) Representative: Bell, Ian Stephen

(56) References cited:
- EP-A2- 1 729 012
- DE-A1- 19 946 187
- DE-C- 714 290
- FR-A1- 2 790 795
- JP-A- 59 028 096
- US-A- 5 511 939
- US-A1- 2008 279 681

## Description

The present invention relates to a blower vacuum appliance or a blower appliance.

In general, blower vacuum appliances comprise a motor and fan arrangement. The motor is usually either petrol or electrically powered. The fan comprises a centrifugal impeller enclosed within a toroidal enclosure known as a volute. The impeller is configured, in use, to draw air in along the axis of rotation towards the centre or "eye" of the impeller and expel air out radially. The volute comprises a fluid inlet surrounding the eye of the impeller and aligned with the axis of rotation of the impeller, and a fluid outlet located at a point on the periphery of the volute. The shape of the volute essentially directs the radially-moving air towards the fluid outlet.

Blower vacuum appliances generally have two modes of operation: blowing and vacuuming. In the blowing mode, clean air is drawn into the volute from the atmosphere via the fluid inlet and is expelled via the fluid outlet. A blower tube is attached to the outlet in order to focus and direct the expelled air into a jet. This jet of air may be aimed through manipulation of the blower tube or blower vacuum to move or gather garden waste.

When in the vacuuming mode, garden waste may be collected up a suction tube connected to the blower vacuum. There are two common structural arrangements for a blower vacuum appliance having a vacuum mode: dirty fan and clean fan configurations.

In a dirty-fan arrangement, a suction tube having a suction inlet is connected to the fluid inlet of the volute and a debris collector (which may comprise separation means such as a semi-porous bag or container) for garden waste is attached in direct fluid connection to the fluid outlet of the volute. Therefore, in this arrangement, the fan is located directly in the flowpath from the suction inlet to the debris collector. Consequently, garden waste or debris entrained in the air passing into the suction inlet passes through the fluid inlet of the volute and collides with the fan before being passed via the fluid outlet of the volute into the debris collector. This arrangement enables garden waste or debris to be broken down or mulched into smaller particles for efficient collection in the debris collector.

In a clean-fan arrangement, a debris collector (which may comprise separation means such as a semi-porous bag or container) for garden waste is also attached in direct fluid connection to the fluid outlet of the volute. However, in contrast, a suction tube comprising a suction inlet is connected downstream of the fluid outlet of the volute.

Therefore, in the same manner as for the blowing mode, in use, air is drawn into the fluid inlet of the volute from the atmosphere and expelled from the volute through the fluid outlet towards the debris collector. The flow of air from the fluid outlet and into and through the debris collector causes a pressure differential between the proximal and distal ends of the suction tube. This causes air to be drawn into the suction inlet, through the suction tube and into the debris collector. Consequently, any garden waste or debris entrained in the air passing into the suction tube will be deposited into the debris collector.

This arrangement has the advantage that the fan is supplied with a clean stream of air at all times and so can operate under optimal conditions with relatively little chance of blockages forming.

An alternative arrangement is simply a blower appliance without a vacuum function. This arrangement operates in the same manner as the blower mode of the clean-fan arrangement. Clean air is drawn into a volute from the atmosphere via a fluid inlet and is expelled via a fluid outlet. A blower tube attached to the fluid outlet focuses and directs the expelled air into a jet. This jet of air may be aimed through manipulation of the blower tube or blower vacuum to move or gather garden waste.

Blower vacuum and/or blower appliances are often required to generate high flow rates of air through the impeller to produce a powerful jet of air (in the blower mode) or powerful suction (in the vacuum mode, where appropriate) in order to clear an external environment of debris and waste. Therefore, it is beneficial to minimise losses in the appliance in order to maximise the available airflow.

Commonly, in a volute arrangement comprising a centrifugal impeller, air is directed towards the eye of the impeller and is then directed radially outward therefrom. However, due to the pressure distribution thus created, some of the air passing into the volute inlet may not pass axially directly into the impeller and may, instead, pass substantially radially between the volute housing and the upper surface of the impeller (known as a shroud). This airflow essentially bypasses the impeller and, consequently, is not accelerated thereby. This may reduce the inlet efficiency of the impeller because not all of the air admitted through the volute inlet passes through the impeller.

FR2790795 discloses a ventilator for continuous industrial building convergent and divergent air flow.

US 2008/0279681 describes a centrifugal blower comprising a body comprising a volute assembly, the volute assembly comprising a central hub and a scroll portion located outwardly of the hub, wherein the hub comprises an air inlet, a motor comprising a drive shaft and an impeller mounted on the drive shaft and configured to rotate about an axis coincident with the centre of the hub, the impeller being located at the centre of the hub and in communication with the air inlet wherein the impeller comprises a base, a shroud and a plurality of blades located there between, wherein the shroud comprises an impeller inlet defining a passageway extending to the plurality of blades, wherein the impeller arrangement further comprises a an inner annular rib and an outer annular rib defining an annular channel there between, the inner annular rib being part of an inner annular wall of the impeller delimiting the impeller inlet and the volute assembly, whereas an annular volute rib extends into the annular channel to restrict airflow between the volute assembly and the shroud.

As a result, there is a need in the art to provide an impeller arrangement which has lower losses than known arrangements.

According to a first aspect of the present invention, there is provided a blower vacuum appliance arrangement as in claim 1.

By providing such an arrangement, inlet losses to the impeller can be reduced when compared to known arrangements. A barrier arrangement provided on the shroud of an impeller is located in close relationship with a complementary portion of the impeller housing adjacent the air inlet. The interaction between these components forms a barrier to bleeding of the airflow away from the inlet, reducing the likelihood of air passing between the shroud and the impeller housing and improving the inlet efficiency of the impeller.

In one embodiment, the barrier arrangement and said portion of the impeller housing define a convoluted path therebetween. By defining a convoluted or labyrinthine pathway between the shroud and the impeller housing, the airflow is forced to undergo numerous directional changes, resulting in a reduction in airflow bleeding and reduced flow rate.

The barrier arrangement comprises an annular channel arranged to receive a portion of the impeller housing therein. This arrangement provides a straightforward and reliable method for providing a barrier to airflow bleeding.

The barrier arrangement comprises two radially-spaced annular ribs formed on the shroud and defining the channel therebetween. Ribs are straightforward to form during manufacture and provide the necessary barrier properties.

The barrier arrangement surrounds the impeller inlet. By surrounding the impeller inlet with the barrier arrangement, the chance of air bleeding away from the impeller inlet is reduced.

According to a second aspect of the present invention, there is provided a blower appliance as in claim 2.

In an embodiment, an annular housing rib is located on the periphery of the housing inlet and is arranged to be located within the annular channel. This provides a reliable and easy to locate structural relationship to form a convoluted physical path to mitigate a leakage airflow.

In one embodiment, the annular housing rib is spaced from the base and sides of the annular channel. This provides sufficient tolerance to prevent contact between the housing rib and the shroud of the impeller during use.

The impeller housing comprises a volute.

In one embodiment, the volute comprises a scroll-type volute outlet downstream of the impeller. A scroll-type volute is particularly useful for directing and channelling airflow downstream of the impeller.

In one embodiment, the appliance is in the form of a debris blower and/or vacuum appliance.

Embodiments of the present invention will now be described in detail with reference to the accompanying drawings, in which:
Figure 1 is a side view showing the general configuration of a blower appliance;
Figure 2 is a side view showing the general configuration of a blower vacuum appliance;
Figure 3 is a cross sectional view of a volute according to an embodiment of the present invention;
Figure 4 is a sectional plan view of the volute of Figure 3;
Figure 5 is a perspective view of part of the volute of Figure 3;
Figure 6 is a perspective view of an impeller according to an embodiment of the present invention;
Figure 7 is a perspective view showing the impeller of Figure 6 located in a part of the volute of Figure 3; and
Figure 8 is a detailed cross sectional view of a part of the volute of Figure 3.

The present invention provides an impeller and volute arrangement which reduces inlet losses to the impeller when compared to known arrangements. A barrier arrangement provided on the shroud of an impeller is located in close relationship with a complementary portion of the volute adjacent the air inlet.

The interaction between these components defines a convoluted or labyrinthine pathway between the shroud and the volute housing, reducing the likelihood of air passing there between and improving the flow of air into the eye of the impeller.

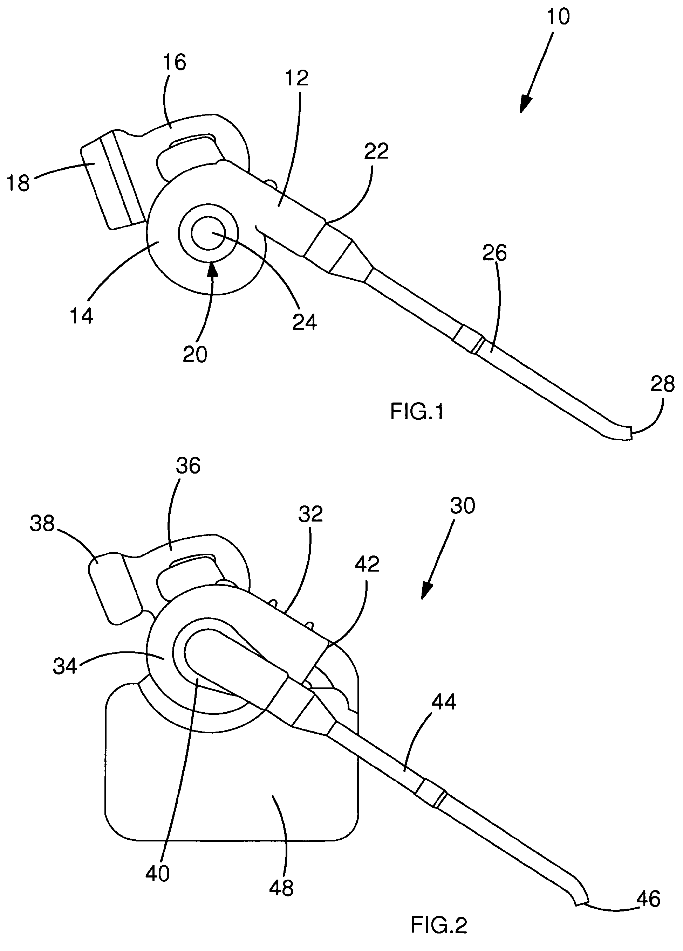

The general configuration of a blower appliance and a blower vacuum appliance will now be described with reference to Figures 1 and 2.

Figure 1 shows an example of a blower (or sweeper) appliance 10 in which embodiments of the present invention may be used. The blower appliance 10 is an electrically-powered appliance which comprises a battery pack. However, alternatively the blower appliance 10 may be mains-powered or comprise an internal combustion engine and fuel tank.

The blower appliance 10 comprises a body 12 which may be formed from a hardened plastic material. The body 12 comprises a volute 14 and a graspable handle 16. A removable power source 18 (in the form of a battery pack) is located at the base of the handle 16.

The volute 14 is essentially disc shaped and houses a motor and impeller arrangement (not shown in Figure 1) for generating an airflow through the blower appliance 10. The volute 14 comprises an air inlet 20 located at the centre of the disc-shaped volute 14 and an air outlet 22 extending tangentially away from the disc shaped portion of the volute 14.

The impeller is operable to draw an airflow through the air inlet 20 and exhaust the airflow through the air outlet 22. The air inlet 20, as shown, is covered by a grille or cover 24 which prevents a user contacting rotating parts located therein. The spacing of the grille 24 is such to prevent insertion of a human finger according to safety standard UL-1017 of Underwriters' Laboratory Inc..

A detachable blower tube 26 is connected to the air outlet 22 and comprises an exhaust outlet 28 at a distal end thereof. The blower tube 26 narrows from the adjacent the air outlet 22 to the exhaust outlet 28 to focus and direct the airflow into a powerful jet.

A blower vacuum appliance 30 is shown in Figure 2. The blower vacuum appliance 30 is similar in configuration to the blower appliance 10 of Figure 1 and is an electrically-powered appliance which comprises a battery pack.

The blower vacuum appliance 30 comprises a body 32 comprising a volute 34 and a graspable handle 36. A removable power source 38 (in the form of a battery pack) is located at the base of the handle 36.

The volute 14 is essentially the same as that of the blower appliance 10 and houses a motor and impeller arrangement (not shown in Figure 2) for generating an airflow through the blower vacuum appliance 30. However, in this instance, the blower vacuum appliance 30 is a dirty-fan arrangement and so the impeller is configured to receive debris and mulch the debris.

The volute 34 comprises an air inlet 40 located at the centre of the disc-shaped volute 34 and an air outlet 42 extending tangentially away from the disc shaped portion of the volute 34. In this arrangement, a suction tube 44 is connected to the air inlet 40 and comprises a suction inlet 46 at a distal end thereof. The suction tube 44 is configured to draw air and entrained debris through the suction inlet 46 and into the volute 34 where the debris is mulched.

A debris collector 48 is connected directly to the air outlet 42 and provides a collection receptacle for the mulched debris passed through the volute 34. The debris collector 48 is semi-porous so that air can escape therethrough and may comprise, for example, a nylon bag or other collection means.

The blower vacuum appliance 30 as described above is shown in a vacuum mode of operation. In order to operate in a blower mode, the suction tube 44 can be detached and connected to the air outlet 42 in the manner of the blower appliance 10. A grille (not shown) can then be connected to the air inlet.

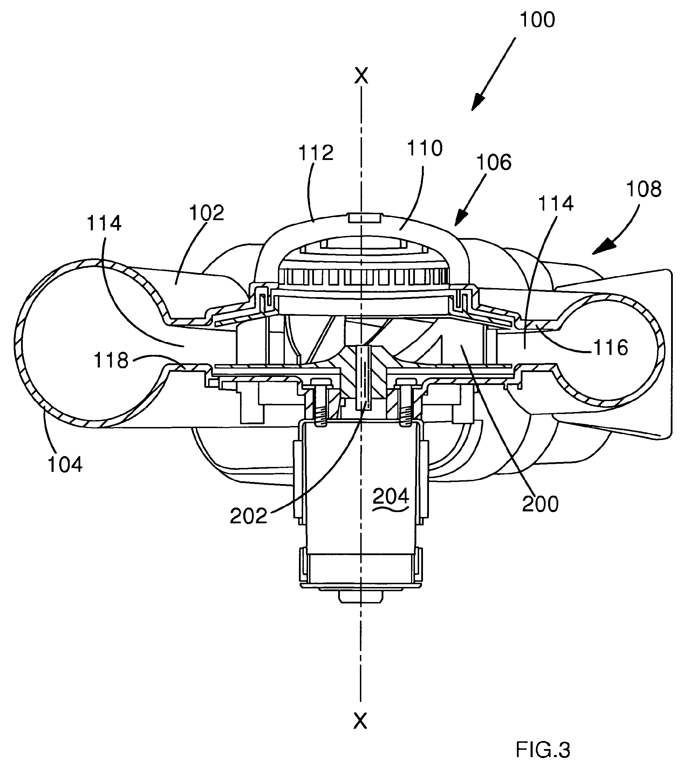

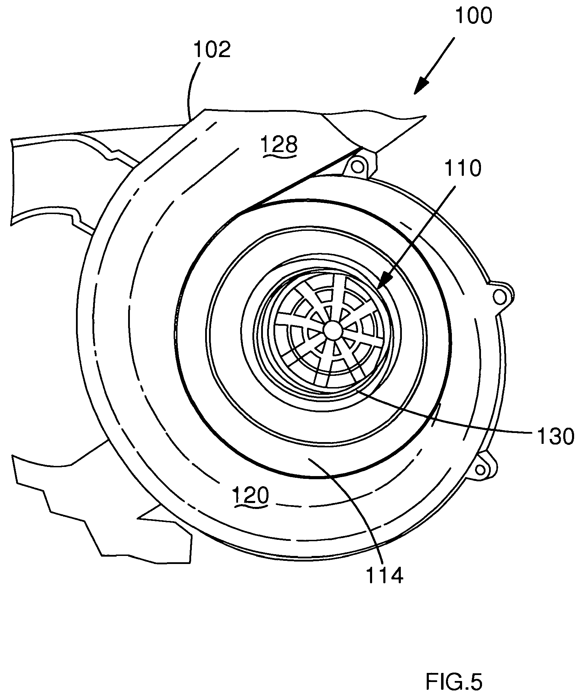

Figures 3 to 7 shows a section through a volute assembly 100 according to an embodiment. Referring to Figures 3 to 6, the volute assembly 100 comprises first and second clamshell portions 102, 104. The clamshell portions 102, 104 define a central hub 106 and a scroll portion 108 located outwardly of the hub 106.

The hub 106 comprises an air inlet 110 located centrally at an upper portion thereof. The air inlet 110 is covered by a grille 112. An impeller 200 is located at the centre of the hub 106 in communication with the air inlet 110. The impeller 200 is mounted on a drive shaft 202 connected to a motor 204. The impeller 200, in use, is operable to rotate on the drive shaft 202 about an axis X-X which is coincident with the centre of the hub 106.

A diffuser 114 is located radially outwardly, and downstream, of the impeller 200 and comprises an annular channel delimited by two diffuser walls 116, 118. The diffuser 114 is located between the hub 106 and the scroll portion 108 of the volute 100 and has a narrower height than either the hub 106 or the scroll region 108.

The diffuser 114 is vaneless. That is to say no vanes, projections or guides are located in the annular channel comprising the diffuser 114 and the diffuser 114 essentially comprises an annular channel defined by the two planar, spaced apart annular walls 116, 118. The diffuser 114 is symmetrical about the axis X-X and has a constant height and width.

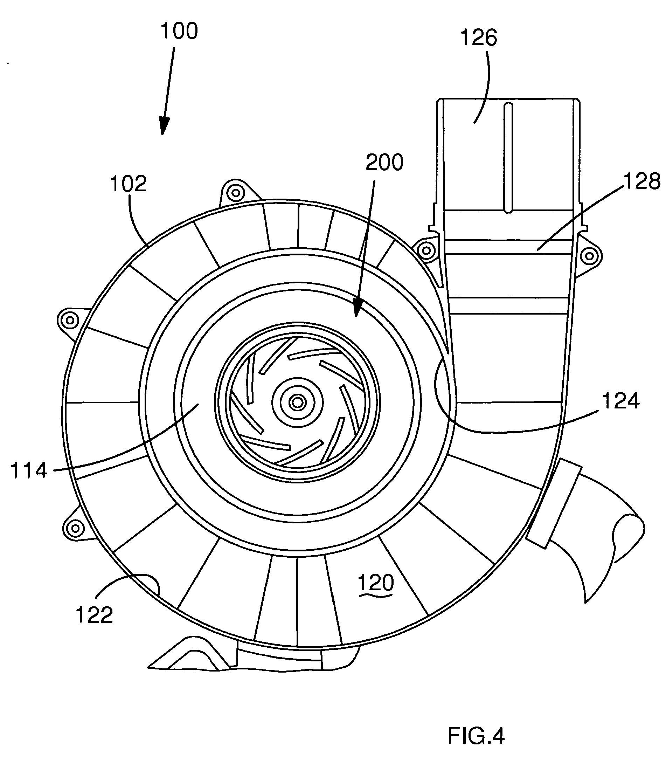

The scroll portion 108 is located in the flowpath immediately downstream of the diffuser 114. The scroll portion 108 comprises a spiral, scroll-like cavity 120 defined by volute walls 122. The volute walls 122 have a circular cross section which increases in diameter in an anticlockwise direction (as shown in Figure 4) from a position adjacent a volute tongue 124 located adjacent the outer portion of the diffuser 114 to terminate in an air outlet 126.

The air outlet 126 is formed at a distal end of a tangential section 128 of the scroll portion 108. As shown in Figure 4, the volute tongue 124 delimits a portion of the tangential section 128 leading to the air outlet 126.

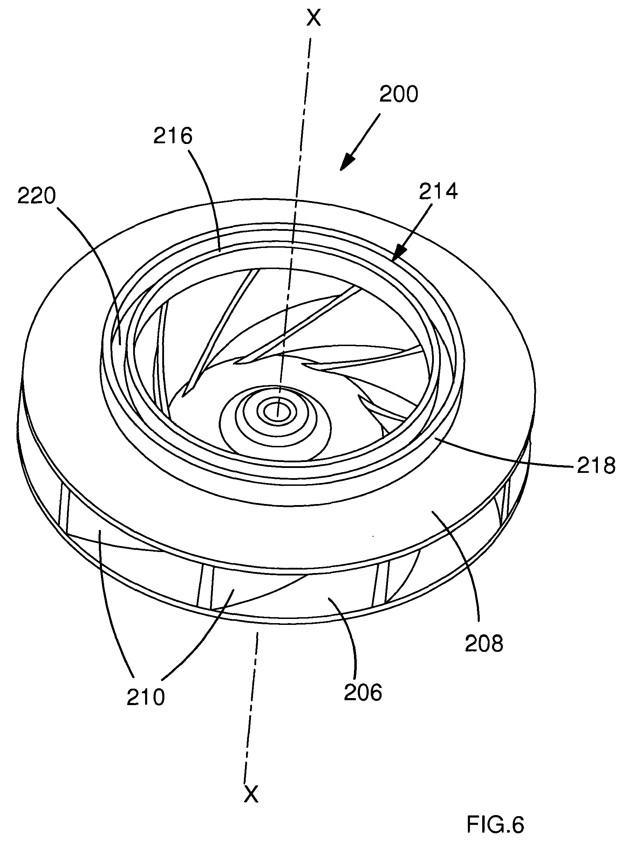

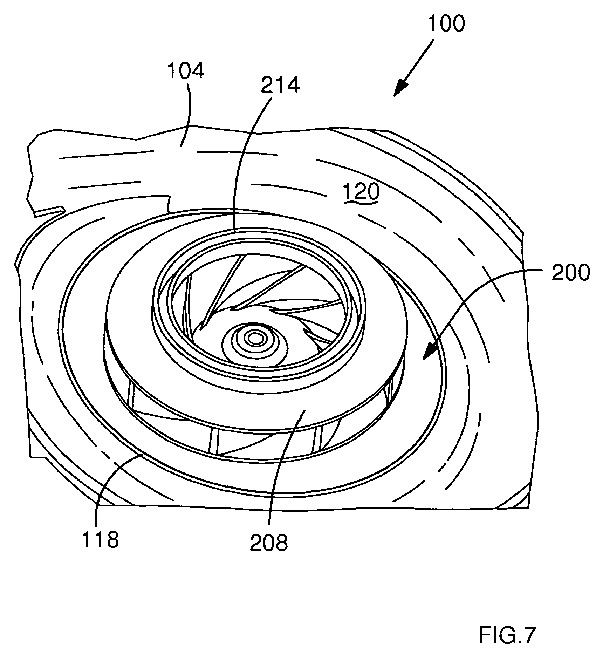

The impeller 200 will now be described in detail with reference to Figures 6 to 8. In Figure 6, the impeller 200 is shown removed from the volute arrangement 100. In Figure 7, the impeller 200 is shown located on the lower clamshell portion 104 with the upper clamshell portion 102 removed.

The impeller 200 includes a base 206, a shroud 208 and a plurality of fan blades 210 located therebetween. The base 206 extends radially from the axis X-X of the drive shaft 202 parallel to the diffuser 114. The fan blades 210 extend perpendicularly from the base 206 and are curved for aerodynamic efficiency. The shroud 208 delimits an axially-arranged inlet 212 to the eye of the impeller 200. When fitted in the volute 100, the inlet 212 to the impeller 200 is co-axial with, and located adjacent, the air inlet 110 formed in the hub 106 of the volute 100.

The shroud 208 comprises a barrier arrangement 214 located on a surface thereof facing away from the base 206. The barrier arrangement 214 comprises two annular ribs 216, 218 which project away from the shroud 208 and surround the inlet 212. The innermost annular rib 216 forms a part of the boundary wall delimiting the inlet 212.

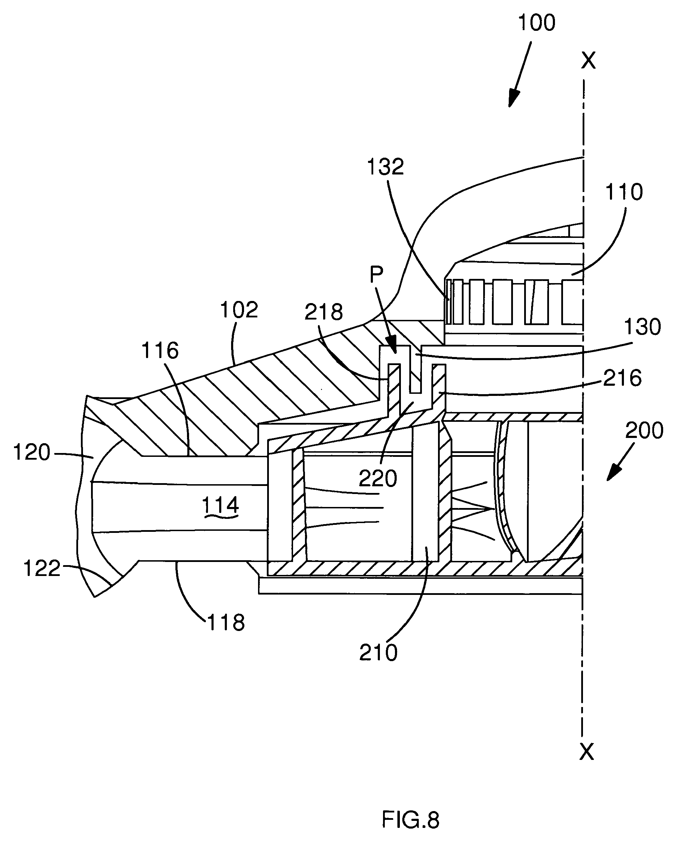

The annular ribs 216, 218 define an annular channel 220 therebetween. This is shown in Figure 8. Figure 8 shows a cross-sectional view (similar to Figure 3) through the volute 100 showing the impeller located in the hub 106 of the volute 100.

As shown in Figure 8, a complementary annular volute rib 130 is formed on the inner surface of the wall of the hub 106 of the volute 100. The annular volute rib 130 extends into the annular channel 220 formed by the annular ribs 216, 218, defining a convoluted or labyrinthine path P (Figure 8) from the air inlet 110 through the annular channel 220.

The volute rib 130 is spaced from the annular ribs 216, 218 in both axial and radial directions to ensure that, in use, tolerances are sufficient to prevent contact between the volute rib 130 and the annular ribs 216, 218 (which will be rotating with the impeller 200).

As shown in Figure 8, an internal inlet wall 132 of the inlet 110 is located at the same radial spacing as the inner annular wall 216 to define an essentially smooth (with the exception of the necessary axial spacing between the annular wall 216 and the internal inlet wall 132) inlet flowpath for air entering the inlet 110 and passing through the inlet 212 into the eye of the impeller 200.

In use, when the motor 204 is activated by a user, the drive shaft 202 will be caused to rotate. The impeller 200, which is secured to the drive shaft 202, will also be caused to be rotated. Thus, an airflow is drawn in through the volute inlet 110 and through the inlet 212 of the impeller 200. The air is then guided onto the fan blades 210 where it is accelerated and dispersed radially outwardly by the fan blades 210. This causes a pressure drop across the impeller 200 because the air downstream of the impeller 200 is moving faster than the upstream airflow. This, in turn, causes further air to be drawn into the volute inlet 110 and into the impeller 200.

In conventional centrifugal impeller arrangements, the pressure drop across the impeller may cause unwanted bleeding of air around the edges of the impeller inlet and between the volute housing and impeller shroud. This reduces throughput of air onto the impeller and the efficiency of the impeller.

However, in the above-described embodiment, the location of the volute rib 130 in the annular channel 220 formed by the annular walls 216, 218 forms a barrier to reduce bleeding of inlet air in this manner. The closely-spaced relationship of the volute rib 130 and annular walls 216, 218 forms the labyrinthine pathway P between the inlet 110 and the outlet of the impeller 200.

Thus, in order to pass through the labyrinthine pathway P, the air is forced to follow a convoluted path having a plurality of direction changes. Each direction change will bleed energy from the airflow and will cause stagnation points at each direction change point. This, in turn, reduces the speed of the airflow therethrough and, consequently, the volume of air flowing per unit time between the volute housing 102 and the shroud 208 of the impeller 200.

As a result, the leakage of air is reduced, enabling more airflow passing through the volute inlet 110 to pass directly into inlet 212 of the impeller 200. This improves the airflow impinging upon the fan blades 210, ensuring that the impeller 200 can operate at a high efficiency. The airflow then passes through the fan blades 210, across the diffuser 114 and is exhausted into the scroll portion 108 of the volute 100. The airflow is then directed around the volute walls 122 towards the tangential portion 128 and through the air outlet 126.

Whilst the above example has been described with reference to blower or blower vacuum appliances generally for use in a domestic environment, the invention is readily applicable to other machines comprising centrifugal impellers. For example, embodiments of the present invention are equally applicable to a domestic or industrial vacuum cleaner.

Embodiments of the present invention have been described with particular reference to the examples illustrated. While specific examples are shown in the drawings and are herein described in detail, it should be understood, however, that the drawings and detailed description are not intended to limit the invention to the particular form disclosed. It will be appreciated that variations and modifications may be made to the examples described within the scope of the present invention as claimed.

## Claims

1. A blower vacuum appliance (30) comprising:
a body (32) comprising a volute assembly (100), the volute assembly (100) comprising a central hub (106) and a scroll portion (108) located outwardly of the hub (106), wherein the hub (106) comprises an air inlet (110) covered by an air grill (112);
a motor (204) comprising a drive shaft (202); and
an impeller (200) mounted on the drive shaft (202) and configured to rotate about an axis coincident with the centre of the hub (106), the impeller (200) being located at the centre of the hub (106) and in communication with the air inlet (110), wherein the impeller (200) comprises a base (206), a shroud (208) and a plurality of blades (210) located therebetween, wherein the shroud (208) comprises an impeller inlet (212) defining a passageway extending to the plurality of blades (210), wherein the impeller (200) arrangement further comprises an inner annular rib (216) and an outer annular rib (218) defining an annular channel (220) therebetween, the inner annular rib (216) being part of an inner annular wall (216) of the impeller delimiting the impeller inlet (212) and the volute assembly (100) comprises an annular volute rib (130) extending into the annular channel (220) to restrict airflow between the volute assembly (100) and the shroud (208) and an internal inlet wall (132) of the air inlet (110) is located at the same radial spacing as the inner annular wall (216).

2. A blower appliance (10) comprising:
a body (32) comprising volute assembly (100), the volute assembly (100) comprising central hub (106) and a scroll portion (108) located outwardly of the hub (106), wherein the hub (106) comprises an air inlet (110) covered by an air grill (112);
a motor (204) comprising a drive shaft (202); and
an impeller (200) mounted on the drive shaft (202) and configured to rotate about an axis coincident with the centre of the hub (106), the impeller (200) being located at the centre of the hub (106) and in communication with the air inlet (110) wherein the impeller (200) comprises a base (206), a shroud (208) and a plurality of blades (210) located therebetween, wherein the shroud (208) comprises an impeller inlet (212) defining a passageway extending to the plurality of blades (210), wherein the impeller (200) arrangement further comprises a an inner annular rib (216) and an outer annular rib (218) defining an annular channel (220) therebetween located adjacent the impeller inlet (212) and the volute assembly (100) comprises an annular volute rib (130) extending into the annular channel (220) to restrict airflow between the volute assembly (100)and the shroud (208) and the inner annular rib (216) is part of an inner annular wall (216) delimiting the impeller inlet (212) and an internal inlet wall (132) of the air inlet (110) is located at the same radial spacing as the inner annular wall (216).

## Patentansprüche

1. Blas-Sauggerät (30), Folgendes umfassend:
ein Gehäuse (32), eine Schneckenbaugruppe (100) umfassend, wobei die Schneckenbaugruppe (100) eine zentrale Nabe (106) und einen Abrollabschnitt (108) umfasst, der sich äußerlich der Nabe (106) befindet, wobei die Nabe (106) einen Lufteinlass (110) umfasst, der durch ein Luftgitter (112) abgedeckt ist;
einen Motor (204), eine Antriebswelle (202) umfassend; und
ein Flügelrad (200), das auf der Antriebswelle (202) montiert ist, und konfiguriert ist, um sich um eine Achse zu drehen, die mit dem Zentrum der Nabe (106) zusammenfällt, wobei sich das Flügelrad (200) im Zentrum der Nabe (106) und in Verbindung mit dem Lufteinlass (110) befindet, wobei das Flügelrad (200) eine Basis (206), eine Abdeckblende (208) und eine Vielzahl von Flügeln (210) umfasst, die dazwischen angeordnet sind, wobei die Abdeckblende (208) einen Flügelradeinlass (212) umfasst, der einen Durchgang definiert, der sich zur Vielzahl von Flügeln (210) hin erstreckt, wobei die Flügelradanordnung (200) darüber hinaus eine innere ringförmige Rippe (216) und eine äußere ringförmige Rippe (218) umfasst, die einen ringförmigen Kanal (220) dazwischen definieren, wobei die innere ringförmige Rippe (216) Teil einer inneren ringförmigen Wand (216) des Flügelrades ist, die den Flügelradeinlass (212) eingrenzt und die Schneckenbaugruppe (100) eine ringförmige Schneckenrippe (130) umfasst, die sich in den ringförmigen Kanal (220) erstreckt, um den Luftstrom zwischen der Schneckenbaugruppe (100) und der Abdeckblende (208) einzugrenzen, und sich eine interne Einlasswand (132) des Lufteinlasses (110) im selben radialen Abstand befindet, wie die innere ringförmige Wand (216).

2. Blasgerät (10), Folgendes umfassend:
ein Gehäuse (32), eine Schneckenbaugruppe (100) umfassend, wobei die Schneckenbaugruppe (100) eine zentrale Nabe (106) und einen Abrollabschnitt (108) umfasst, der sich äußerlich der Nabe (106) befindet, wobei die Nabe (106) einen Lufteinlass (110) umfasst, der durch ein Luftgitter (112) abgedeckt ist;
einen Motor (204), eine Antriebswelle (202) umfassend; und
ein Flügelrad (200), das auf der Antriebswelle (202) montiert ist, und konfiguriert ist, um sich um eine Achse zu drehen, die mit dem Zentrum der Nabe (106) zusammenfällt, wobei sich das Flügelrad (200) im Zentrum der Nabe (106) und in Verbindung mit dem Lufteinlass (110) befindet, wobei das Flügelrad (200) eine Basis (206), eine Abdeckblende (208) und eine Vielzahl von Flügeln (210) umfasst, die dazwischen angeordnet sind, wobei die Abdeckblende (208) einen Flügelradeinlass (212) umfasst, der einen Durchgang definiert, der sich zur Vielzahl von Flügeln (210) hin erstreckt, wobei die Flügelradanordnung (200) darüber hinaus eine innere ringförmige Rippe (216) und eine äußere ringförmige Rippe (218) umfasst, die einen ringförmigen Kanal (220) dazwischen definieren, der sich am Flügelradeinlass (212) angrenzend befindet, und die Schneckenbaugruppe (100) eine ringförmige Schneckenrippe (130) umfasst, die sich in den ringförmigen Kanal (220) erstreckt, um den Luftstrom zwischen der Schneckenbaugruppe (100) und der Abdeckblende (208) einzugrenzen, und die innere ringförmige Rippe (216) Teil einer inneren ringförmigen Wand (216) ist, die den Flügelradeinlass (212) eingrenzt, und sich eine innere Einlasswand (132) des Lufteinlasses (110) im selben radialen Abstand befindet, wie die innere ringförmige Wand (216).

## Revendications

1. Appareil à vide de turbine (30) comprenant :
un corps (32) comprenant un ensemble de volutes (100), l'ensemble de volutes (100) comprenant un moyeu central (106) et une partie de volute (108) située vers l'extérieur du moyeu (106), dans lequel le moyeu (106) comprend une entrée d'air (110) couverte par une grille d'air (112) ;
un moteur (204) comprenant un arbre d'entraînement (202) ; et
une roue (200) montée sur l'arbre d'entraînement (202) et configurée pour tourner autour d'un axe coïncident avec le centre du moyeu (106), la roue (200) étant située au centre du moyeu (106) et en communication avec l'entrée d'air (110), dans lequel la roue (200) comprend une base (206), un anneau de renforcement (208) et une pluralité de pales (210) situées entre ceux-ci, dans lequel l'anneau de renforcement (208) comprend une entrée de roue (212) définissant un passage s'étendant vers la pluralité de pales (210), dans lequel l'agencement de roue (200) comprend en outre une nervure annulaire intérieure (216) et une nervure annulaire extérieure (218) définissant un canal annulaire (220) entre elles, la nervure annulaire intérieure (216) étant une partie d'une paroi annulaire intérieure (216) de la roue délimitant l'entrée de roue (212) et l'ensemble de volutes (100) comprend une nervure de volute annulaire (130) s'étendant dans le canal annulaire (220) pour restreindre le flux d'air entre l'ensemble de volutes (100) et l'anneau de renforcement (208) et une paroi d'entrée interne (132) de l'entrée d'air (110) est située sur le même espacement radial que la paroi annulaire intérieure (216).

2. Appareil de turbine (10) comprenant :
un corps (32) comprenant un ensemble de volutes (100), l'ensemble de volutes (100) comprenant un moyeu central (106) et une partie de volute (108) située vers l'extérieur du moyeu (106), dans lequel le moyeu (106) comprend une entrée d'air (110) couverte par une grille d'air (112) ;
un moteur (204) comprenant un arbre d'entraînement (202) ; et
une roue (200) montée sur l'arbre d'entraînement (202) et configurée pour tourner autour d'un axe coïncident avec le centre du moyeu (106), la roue (200) étant située au centre du moyeu (106) et en communication avec l'entrée d'air (110), dans lequel la roue (200) comprend une base (206), un anneau de renforcement (208) et une pluralité de pales (210) situées entre elles, dans lequel l'anneau de renforcement (208) comprend une entrée de roue (212) définissant un passage s'étendant vers la pluralité de pales (210), dans lequel l'agencement de roue (200) comprend en outre une nervure annulaire intérieure (216) et une nervure annulaire extérieure (218) définissant un canal annulaire (220) entre elles situé de manière adjacente à l'entrée de roue (212) et l'ensemble de volutes (100) comprend une nervure de volute annulaire (130) s'étendant dans le canal annulaire (220) pour restreindre le flux d'air entre l'ensemble de volutes (100) et l'anneau de renforcement (208) et la nervure annulaire intérieure (216) fait partie d'une paroi annulaire intérieure (216) délimitant l'entrée de roue (212) et une paroi d'entrée interne (132) de l'entrée d'air (110) est située sur le même espacement radial que la paroi annulaire intérieure (216).
